# EUROPÄISCHE PATENTSCHRIFT

(11) **EP 1 436 176 B1**
(45) Veröffentlichungstag und Bekanntmachung des Hinweises auf die Patenterteilung: **08.10.2008**
(21) Anmeldenummer: 02781266.8
(22) Anmeldetag: 17.10.2002
(51) Int. Cl.: B60R 21/20, B29C 44/12

(54) **INNENVERKLEIDUNGSTEIL FÜR KRAFTFAHRZEUGE**
INTERIOR PANELLING PART FOR MOTOR VEHICLES
PIECE DE REVETEMENT INTERIEUR POUR VEHICULES AUTOMOBILES

(30) Priorität: 17.10.2001 DE 10151367
(43) Veröffentlichungstag der Anmeldung: 14.07.2004
(73) Patentinhaber: Faurecia Innenraumsysteme GmbH, 76767 Hagenbach (DE)
(72) Erfinder: SCHMIDT, Ralf, 76744 Leimersheim (DE); BRONNER, Daniel, 76351 Linkenheim-Hochstetten (DE); CESAR, Nelly, 76137 Karlsruhe (DE); KONNERTH, Ralf, 97350 Mainbernheim (DE)
(74) Vertreter: Pfenning, Meinig & Partner GbR
(86) Internationale Anmeldenummer: PCT/EP2002/011650
(87) Internationale Veröffentlichungsnummer: WO 2003/033313

(56) Entgegenhaltungen:
- EP-A- 0 894 679
- EP-A- 0 968 889
- WO-A-01/07297
- DE-A- 3 816 876
- DE-A- 19 833 336
- DE-A- 19 835 612
- DE-A- 19 962 551
- US-A- 5 458 361
- US-A- 5 590 903

## Beschreibung

Die vorliegende Erfindung betrifft ein Innenverkleidungsteil für Kraftfahrzeuge nach dem Oberbegriff des Anspruchs 1 sowie ein Verfahren zur Herstellung eines Innenverkleidungsteils.

Es sind Innenverkleidungsteile für Kraftfahrzeuge bekannt, welche eine Schwachstelle zur Bildung einer Öffnung zum Durchtritt eines Airbags aufweisen. Solche Innenverkleidungsteile weisen ein Trägerteil aus einem schwer verformbaren Kunststoff auf. Dieses Trägerteil ist, insbesondere bei höherwertigen Fahrzeugen mit einem sichtseitigen Dekor versehen, welches auf dem Trägerteil angebracht ist. Das Trägerteil weist mindestens eine Schwachstelle zur Bildung einer Öffnung für den Durchtritt eines Airbags durch das Trägerteil hindurch auf. Diese Schwachstelle ist notwendig, damit der Airbag überhaupt durch das Trägerteil hindurch in den Fahrzeuginnenraum treten kann.

Das Trägerteil ist bei Innenverkleidungsteilen nach dem Stand der Technik durchgehend gewählt, da somit erreicht wird, dass das Dekor ein homogenes Flächenbild ohne Wellungen bzw. Dellen aufweist.

Nachteilig ist jedoch, dass beim Auslösen des Airbags, insbesondere beim Auslösen von Airbags wenn sich Körperteile der Fahrzeuginsassen in unmittelbarer Nähe befinden, durch die geschoßartig herausschnellenden Teile des Trägers zusätzliche Verletzungen entstehen können.

Die veröffentlichte europäische Patentanmeldung EP 0 894 679 A2 zeigt eine Säulenverkleidung für Säulen von Kraftfahrzeugen und stellt den nächstliegenden Stand der Technik gemäß Oberbegriff des Anspruchs 1 dar. Gegenstand der Erfindung ist eine Säulenverkleidung für Säulen von Kraftfahrzeugen bestehend aus mindestens einem Öffnungsbereich und mindestens einem Befestigungsbereich, wobei der Öffnungsbereich aus einem thermoplastischen Kunststoff mit einer Shore-A-Härte von 30 - 90 besteht. Insbesondere zeigt die EP 0 694 679 A2 ein gattungsgemäßes Innenverkleidungsteil für Kraftfahrzeuge, mit mindestens einer Schwachstelle zur Bildung einer Öffnung zum Durchtritt eines Airbags mit einem Trägerteil und einem sichtseitigen Dekor, dass auf dem Trägerteil angebracht ist, wobei das Trägerteil im Bereich der späteren Durchtrittsöffnung eine Aussparung aufweist, welche von einem Klappenteil aus einem weicheren Material als das Trägerteil zumindest teilweise überbrückt ist.

Die deutsche Offenlegungsschrift DE 199 62 551 A1 zeigt eine Airbaganordnung in einem Innenraumverkleidungsteil eines Kraftfahrzeuges. Die Abdeckung einer Öffnung ist dort durch eine Schaumstruktur gebildet, welche zumindest über die Hälfte der Grundfläche der Abdeckung durch eine flexible Verstärkungslage flächig verstärkt wird, die als Scharnier für die Schaumstruktur gestaltet ist.

Das US-Patent 5 458 361 zeigt einen Einsatz sowie eine Methode zu deren Herstellung zum Einsatz als Airbagverkleidung in einem Kraftfahrzeug. Es handelt sich hierbei um eine Klappenanordnung, welche in einem mehrstufigen Spritzgießverfahren hergestellt wird, wobei die Airbagöffnung durch einen anderen Kunststoffabschnitt abgedeckt wird als der Kunststoffträger, welcher diese Umgebung umgibt.

Schließlich zeigt die deutsche Offenlegungsschrift DE 38 16 876 A1 ein Verfahren zur Herstellung eines mehrschichtigen Formteils, bestehend aus einer außen angeordneten Dekorationsschicht, einer damit verbundenen Schicht aus schäumbarem und aushärtbarem Material sowie einer weichen, kompressiblen Dämm- bzw. Absorptionsschicht.

Der vorliegenden Erfindung liegt daher die Aufgabe zugrunde, ein Innenverkleidungsteil zu schaffen, welches einerseits auch mit weichen Materialien ohne Dellen bzw. Wellungen kaschierbar ist und vor allem beim Auslösen keine Verletzungen der Fahrzeuginsassen hervorruft.

Diese Aufgabe wird durch ein erfindungsgemäßes Innenverkleidungsteil sowie ein entsprechendes erfindungsgemäßes Herstellungsverfahren gelöst.

Dadurch, dass bei dem erfindungsgemäßen Innenverkleidungsteil das Trägerteil im Bereich der späteren Durchtrittsöffnung für den Airbag eine Aussparung aufweist, welche von einem Klappenteil aus einem weicheren Material als das Trägerteil zumindest teilweise überbrückt ist, wird erreicht, dass kein harter Gegenstand auf die Fahrzeuginsassen treffen kann bei Auslösen des Airbags. Ein solches System bietet sich z.B. für sogenannte "Kniebags", welche die Knie bzw. Beine von Fahrzeuginsassen im Falle eines Unfalles schützen sollen. Das Klappenteil bewirkt hierbei, dass einerseits bei unausgelöstem Airbag die Aussparung des Trägerteils überbrückt wird und es somit nicht zu einer Wellenbildung des Dekors im Bereich der Aussparung kommt. Andererseits wird jedoch durch die Tatsache, dass das Klappenteil aus einem weicheren Material als das Trägerteil gefertigt ist, erreicht, dass selbst bei Auftreffen des Klappenteils auf den Körper von Fahrzeuginsassen hierdurch keine zusätzlichen Verletzungen entstehen (das Klappenteil hat vorzugsweise eine Härte von 80-85 Shore A, als Material eignet sich Santoprene oder Sarlink 3180B, und muss im Temperaturbereich von -40°C bis +90°C einsetzbar sein).

Das Dekor ist hierbei auf der dem Trägerteil zugewandten Seite hinterschäumt, wobei das Klappenteil Teil der Hinterschäumung ist und die Hinterschäumung im Bereich der Aussparung einen härteren Schaum aufweist als in den übrigen Bereichen der Hinterschäumung.

Vorteilhafte Weiterbildungen der vorliegenden Erfindung werden in den abhängigen Ansprüchen angegeben.

Das erfindungsgemäße Innenverkleidungsteil eignet sich besonders für Dekors aus textilen Materialien. Hierbei kommen z.B. Stoff oder Teppich (z.B. ein Veloursteppich mit textilem Rücken) in Frage. Diese Materialien werden für gewöhnlich insbesondere im Fußraum der Insassen von höherpreisigen Fahrzeugen verbaut. Es ist jedoch auch möglich, als Dekor eine Schaumfolie oder sogar eine Lederschicht vorzusehen. Hierbei ist je nach Art des Dekors im Randbereich der Aussparung eine zusätzliche Schwächung auch des Dekors vorzusehen, um ein definiertes Aufreißen des Innenverkleidungsteils sicherzustellen. Zur Komfortsteigerung (angenehmere Haptik) kann außerdem noch das Dekor zum Trägerteil hin hinterschäumt werden, hiermit ist zum einen eine gute Befestigung des Dekors und zum anderen eine noch weiter erhöhte Sicherheit für Fahrzeuginsassen beim Aufprall gegeben.

Die konstruktive Ausführung der Erfindung sieht vor, daß das Klappenteil Teil der Hinterschäumung ist. Hierbei ist notwendig, daß im Bereich der Aussparung eine die Aussparung überspannende und zur Hinterschäumung gehörende Abdichtungsfolie vorgesehen ist. Außerdem ist es besonders vorteilhaft, daß das Klappenteil mit dem Trägerteil über ein als Gewebe oder Gewirke ausgeführtes Scharnier verbunden ist. Diese Gewebe kann einerseits am Trägerteil eingespritzt sein bzw. mit dem Trägerteil verklebt oder vernietet oder verschweißt sein und andererseits am Klappenteil eingeschäumt sein. Das Gewebe ermöglicht, daß bei Explosion des Airbags das Klappenteil und auch die Anbindung am Trägerteil quasi definiert nach unten klappt und nicht durch Herausschnellen auf den Körper von Insassen hin beschleunigt wird.

Eine besonders vorteilhafte Variante dieser konstruktiven Ausführung sieht hierbei vor, daß die Hinterschäumung im Bereich der Aussparung einen härteren Schaum aufweist in den Bereichen der übrigen weichen Hinterschäumung. In Kombination mit einer gezielten Schwächung des eingeschäumten Scharniergewebes wird hiermit erreicht, daß ein definiertes Herausbrechen des Klappenteils im Bereich der Durchdringöffnung des Airbags gegeben ist. Somit wird im Wesentlichen ein Brechen im Bereich dieser Schnittstelle erzeugt, es kommt nicht infolge Scherkräften zu einem Mitziehen und damit Ablösen angrenzender Hinterschäumungsbereiche, welche auf dem Trägerteil angebracht sind.

Die höhere Dichte der Hinterschäumung im Bereich der Aussparung bzw. der Durchdringöffnung für den Airbag läßt sich vorteilhafterweise durch ein die Aussparung bedeckendes Schnittschaumteil erreichen, welches zunächst auf das Trägerteil aufgelegt wird und anschließend die Hinterschäumung zwischen Dekor und Trägerteil durchgeführt wird, wobei einerseits Trägerteil und Dekor verbunden werden und andererseits der Schnittschaum selbst eingebunden wird in die übrige Hinterschäumung.

Vorteilhafte Weiterbildungen der vorliegenden Erfindung werden in den übrigen abhängigen Ansprüchen angegeben.

Die Erfindung wird nun anhand mehrerer Figuren erläutert. Es zeigen:

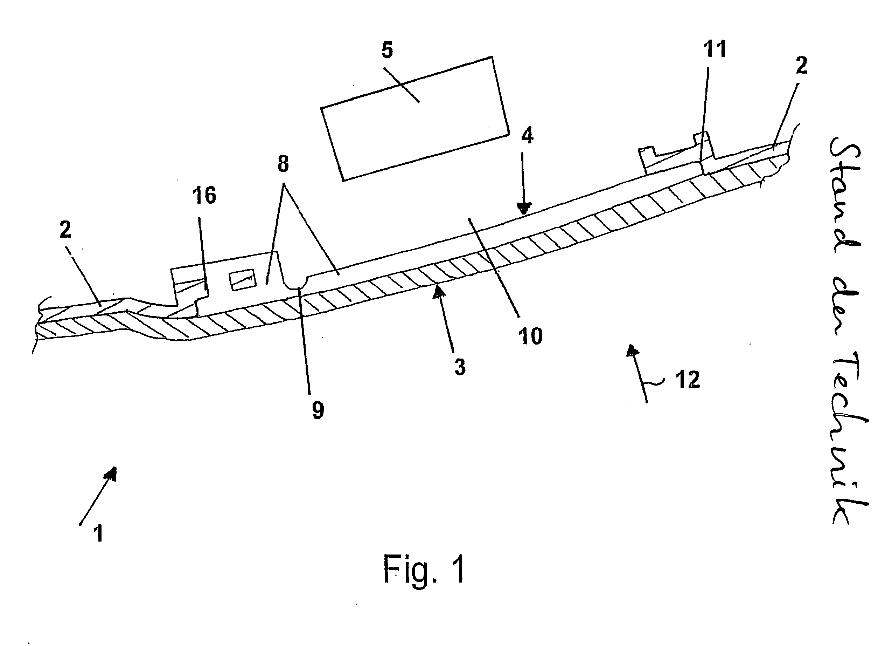

- Fig. 1: einen Teil eines nicht erfindungsgemäßen Innenverkleidungsteils,
- Fign. 2a:
- bis 2e: den Herstellungsprozeß eines erfindungsgemäßen Innenverkleidungsteils.

Fig. 1 zeigt eine nicht erfindungsgemäße Ausführungsform eines Innenverkleidungsteils 1 für Kraftfahrzeuge. Diese zeigt ein Trägerteil 2, welches eine Aussparung 10 aufweist zum Durchtritt eines in Fig. 1 nicht aufgeblasenen Airbags 5. Auf dem Trägerteil 2 ist in sichtseitiger Richtung 12 ein Dekor 3 angebracht. Die Aussparung 10 ist in ihrem Randbereich mit einer Stufung 11 versehen. Die Aussparung ist außerdem mit einem Einsatz 8 verbunden. Der Einsatz 8 weist ein Klappenteil 4 auf, welches über ein als Wandstärkenverdünnung ausgeführtes Scharnier 9 mit dem übrigen Einsatz 8 verbunden ist. Der Einsatz 8, insbesondere das Klappenteil 4 sind aus einem weicheren Material als das Trägerteil 2.

Der Einsatz 8 ist im Bereich 16 formschlüssig mit dem Trägerteil 2 verbunden. Alternativ bzw. zusätzlich ist es auch möglich, den Einsatz einzuspritzen bzw. mit dem Trägerteil zu verkleben. Es bietet sich an, den Einsatz aus einem thermoplastischen Elastomer herzustellen. Besonders geeignet sind als Materialien TPE oder EPDM.

In jedem Fall ist die Stufung 11 so ausgeführt, daß sichtseitig sich eine stetige Oberfläche ergibt, auf welcher das Dekor 3 aufgebracht ist. Das Klappenteil 4 ist vorzugsweise im Wesentlichen rechteckig ausgeführt, wobei abgesehen von der scharnierseitigen Seite 9 die übrigen drei Seiten nicht umlaufend fest mit dem Träger 2 verbunden sind, sondern lediglich auf diesem aufliegen, wie es z.B. für die der scharnierseitigen Seite gegenüber liegende Seite im Bereich der Stufung 11 in Fig. 1 gezeigt ist oder an definierten Stellen formschlüssig fixiert sind.

Das Dekor 3 ist vorliegend als Veloursteppich mit textilem Rücken ausgeführt. Für sämtliche Ausführungsformen der Erfindung gilt jedoch, daß diese aus beliebigen textilen Materialien (entweder Stoffe, Teppich oder auch aus Schaumfolie oder Leder) sein können. Auch ist bei sämtlichen Ausführungsformen möglich, daß eine Hinterschäumung zwischen Träger bzw. Klappenteil und Dekor bestehen kann. Eine Beschichtung mit textilen Materialien ist dann angezeigt, wenn es sich bei dem Innenverkleidungsteil um ein solches handelt, welches sich im Kniebereich der Fahrzeuginsassen befindet und als sogenannter "Kniebag" dient. Je nach Materialeigenschaften des Dekors ist es sinnvoll, diese im Bereich der Aussparung 10 (bzw. Durchtrittsöffnung für den Airbag) zu schwächen, damit es zu einem definierten Aufreißen des Dekors im Falle des Airbagdurchtrittes kommt.

Im Falle daß der Airbag 5 explodiert bzw. sich aufbläst stößt er gegen das Klappenteil 4, welches sodann eine Schwenkbewegung um das Scharnier 9 ausführt und dabei das Dekor 3 aufreißt. Hierdurch wird eine im Bereich der Aussparung 10 liegende Durchtrittsöffnung für den Airbag frei, durch welche der Airbag vollständig hindurchtreten kann. Durch die Weichheit des Klappenteils 4 und dessen Befestigung am Trägerteil wird gewährleistet, daß keine geschoßartig herausfliegenden harten Teile auf die Insassen einwirken können.

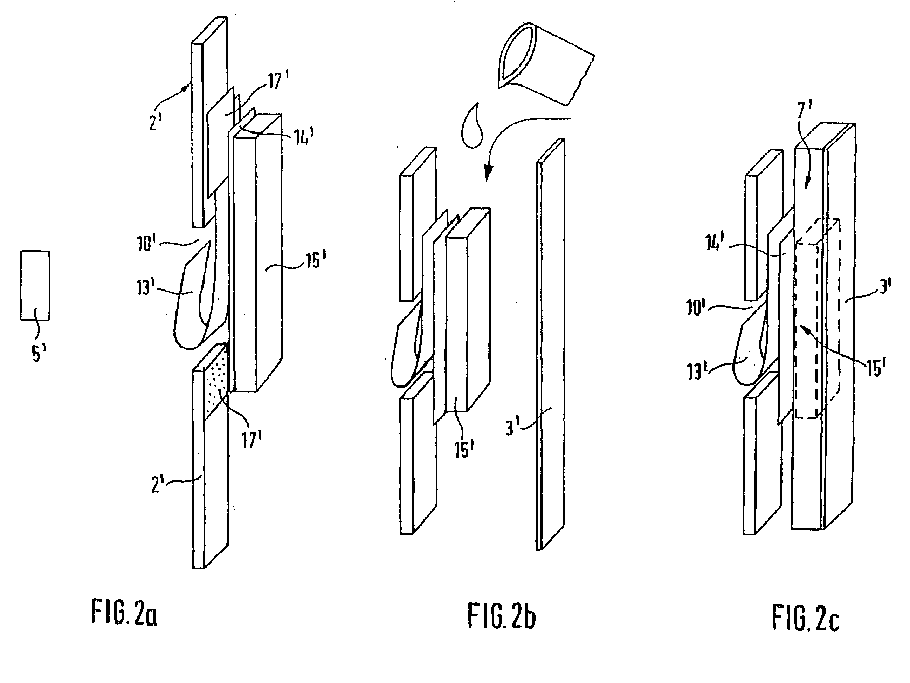

Fign. 2a bis 2e beschreiben eine Ausführungsform 1' gemäß Erfindung. Zunächst wird hierbei auf eine mögliche Herstellungsvariante dieser Ausführungsform eingegangen, bevor diese selbst näher beschrieben wird.

Fig. 2a zeigt den Zusammenbau des befestigen Scharnier-Gewebes (13', 14', 15' und 17') auf der Versteifung 2'. Das Scharnier-Gewebe besteht hauptsächlich aus einem Schnittschaum 15' und einem Gewebe 13'. Die beiden Bauteile werden mit einer Abdichtungsfolie 14' zusammen kaschiert. Dieses Scharnier-Gewebe wird auf die Versteifung um die Aussparung auf die dem unaufgeblasenen Airbag 5' abgewandten Seite mit Klebstoff 17' bzw. einer Klebefolie befestigt oder verschweißt.

Fig. 2b zeigt dann, wie zwischen Trägerteil und ein Dekor 3' ein Hinterschäumungsprozeß durchgeführt wird, an dessen Ende der in Fig. 2c zu erkennende Zustand gegeben ist. Es ist zu erkennen, daß im Bereich der Aussparung 10' das Schnittschaumteil 15' in die übrige Hinterschäumung 7' eingebunden ist und bildet dadurch eine höhere Reißfestigkeit als der übliche Schaum und eine Verbindung zwischen Dekor 3' und Hinterschäumung 7' (zu dieser Hinterschäumung gehört auch die Abdichtungsfolie 14') gegeben ist.

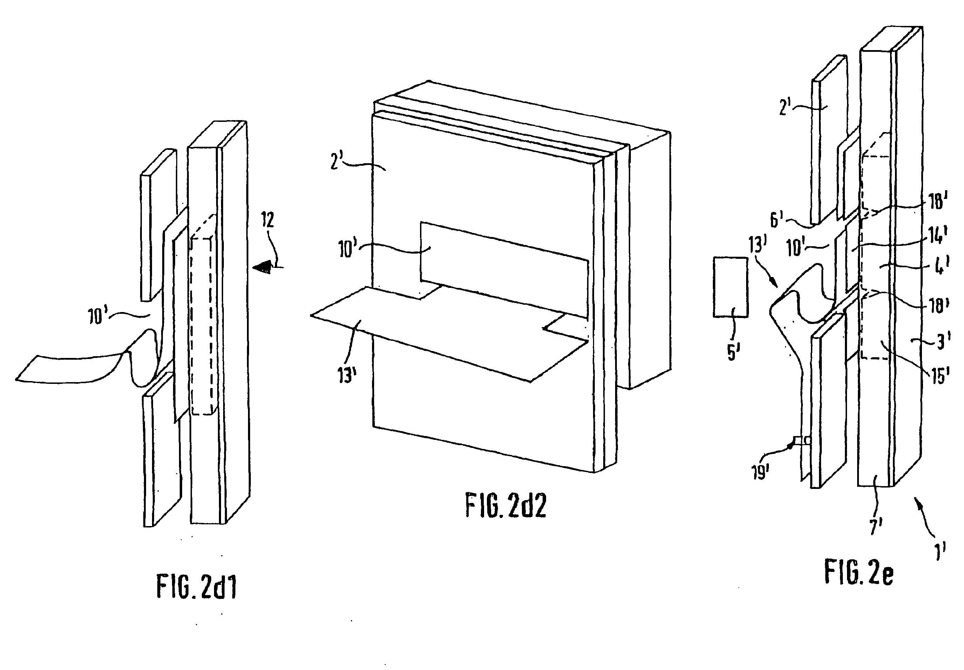

Fig. 2d1 und 2d2 zeigen verschiedene Ansichten eines Schwächungsprozesses zur Herausbildung eines Klappenteils 4'. Hierzu wird mit einem Heiß- bzw. einem Kaltmesser oder Lasern von der nicht sichtseitigen Seite des Trägers 2' aus im Wesentlichen entlang des Randes der Aussparung 10' eine entsprechende Schwächung durchgeführt. In Fig. 2d2 ist jeweils zu sehen, daß das Gewebeteil 13', welches im oberen Bereich hierbei durchtrennt wird, im Durchtrittsbereich durch die Aussparung 10' eine verminderte Breite aufweist. Schließlich ist das Ergebnis des Herstellungsprozesses in Fig. 2e zu sehen. Das entstandene Klappenteil 4' befindet sich innerhalb der Einkerbungen 18'. Auf der Rückseite ist fest mit diesem Klappenteil 4' ein Teil des Gewebes 13' verbunden (entweder durch Verklebung oder Kaschieren verschweißt). Fest steht zumindest, daß das Gewebe 13' mit dem Klappenteil 4' eine komplette untrennbare Einheit bildet. Das andere Ende des Gewebes 13' ist mit dem Trägerteil 14' verbunden. Hierbei kommt neben Verkleben auch die Möglichkeit des Verschraubens bzw. Befestigens mittels Niet 19' oder Ultraschallschweißen in Frage.

Erfindungsgemäß ist das Klappenteil 4', welches durchschäumten Schnittschaum 15' enthält, aus einem weicheren Material als das Trägerteil 2'. Allerdings ist dieser Bereich trotzdem härter als der übliche Bereich der Hinterschäumung 7', um somit ein besseres Bruchverhalten (z.B. Scherung) im Bereich der Einkerbungen 18' zu erhalten. Dadurch, daß das Klappenteil 4' Teil der Hinterschäumung ist, ist eine sehr kostengünstige Herstellung möglich. Es ist für die Funktion des Airbags 5' außerdem vorteilhaft, wenn der Randbereich 6' der Aussparung 10' nicht scharfkantig ist (also z.B. mit Radien versehen ist).

Im Falle des Auslösens des Airbags 5' kommt es durch den dabei entstehenden Druck zu einem Aufbrechen des Klappenteils im Bereich der umlaufenden Einkerbungen 18' und zu einem Reißen des Dekors 3' in diesem Bereich. Der Airbag kann durch die Aussparung 10' hindurchtreten, das Klappenteil wird jedoch durch das Gewebe 13' gebremst und nach unten abgelenkt, so daß es nicht zu Verletzungen von Fahrzeuginsassen durch das herausschnellende Klappenteil 4' kommen kann.

Eine besonders vorteilhafte Ausführungsform sieht vor, daß das Klappenteil, welches das Trägerteil im Bereich der Aussparung überbrückt, Teil einer Ausschäumung ist, welche zum Beispiel zwischen einem Dekor und dem Trägerteil angeordnet ist. Hierbei ist besonders vorteilhaft, daß die Aussparung zunächst mit einer Abdichtungsfolie überdeckt ist, auf welche zum Beispiel ein Schnittschaum, gelegt wird und daß anschließend eine Umschäumung des Schnittschaumes mit Weichschaum erfolgt. Diese Abdichtungsfolie hat den vorteilhaften Effekt, daß bei Einschäumung des Schnittschaums sichergestellt wird, daß kein Weichschaum durch die Airbagaussparung hindurchtritt und somit die spätere Airbagfunktion beeinträchtigt werden könnte. Andererseits wird gewährleistet, daß ein relativ "weicher" Schnittschaum verwendet werden könnte, so daß aufgrund hoher Durchtränkung eine gute Kopplung zu dem Weichschaum gegeben ist (also keine Ablösung, welche eine Gefahr der Insassen darstellen könnte). Außerdem wird durch die Abdichtungsfolie gewährleistet, daß auch der eingeschäumte Schnittschaum nicht bei der Airbagdetonation sich in viele Teile auflöst, welche ebenfalls geschoßmäßig durch den Fahrzeuginnenraum fliegen könnten, so daß diese Variante zu einer noch weiteren Erhöhung der Sicherheit führt.

Vor Anbringung des Gewebes 13' werden die Nuten 18' zum Beispiel mittels Laserschwächung eingebracht, anschließend wird mit Bildung einer Schlaufe das Gewebe 13' (siehe Fig. 2e) an dem Träger 2' befestigt (zum Beispiel geklebt und/oder genietet oder mit den dem Fachmann bekannten ähnlichen Verfahren befestigt). Im Falle der Auslösung des Airbagmoduls 5' wird das Klappenteil 4' zunächst entlang der Sollbruchlinien 18' abgetrennt. Zunächst entsteht durch den sich weiter expandierenden Gassack eine lineare Bewegung des Klappenteils 4' senkrecht vom Träger 2' weg bis die Schlaufe des Gewebebandes 13' gespannt ist.

Danach wird eine Schwenkbewegung des Klappenteils 4' eingeleitet. Die Länge der Schlaufe ist so bemessen, daß die dem Airbagmodul zugewandte Seite des Klappenteils 4' die Fläche des Dekors 3' durchtreten hat.

Eine weitere vorteilhafte Ausführung bestünde darin, das Gewebeteil 13' in seiner Länge so zu bemessen, daß am Ende der Linearbewegung das Klappenteil 4' mit seiner dem Airbagmodul 5' zugewandten Seite um mindestens eine Klappendicke des Klappenteils 4' (inklusive hierauf aufgebrachter Zusatzschichten) von der Dekoroberfläche 3' entfernt ist, um so eine Behinderung der Drehbewegung des Klappenteils 4' zu verhindern.

## Patentansprüche

1. Innenverkleidungsteil (1') für Kraftfahrzeuge, mit mindestens einer Schwachstelle zur Bildung einer Öffnung zum Durchtritt eines Airbags (5'), mit einem Trägerteil (2') und einem sichtseitigen Dekor (3'), das auf dem Trägerteil angebracht ist, wobei
dass das Trägerteil im Bereich der späteren Durchtrittsöffnung eine Aussparung (10') aufweist, welche von einem Klappenteil (4') aus einem weicheren Material als das Trägerteil zumindest teilweise überbrückt ist,
**dadurch gekennzeichnet, dass** das Dekor auf der dem Trägerteil zugewandten Seite hinterschäumt (7') ist und das Klappenteil (4') Teil der Hinterschäumung (7') ist,
wobei die Hinterschäumung (7') im Bereich der Aussparung (10') einen härteren Schaum aufweist als in den übrigen Bereichen der Hinterschäumung.

2. Innenverkleidungsteil nach Anspruch 1, **dadurch gekennzeichnet, dass** das Dekor (3') als textiles Material, als Schaumfolie oder als Lederschicht ausgeführt ist.

3. Innenverkleidungsteil nach einem der vorhergehenden Ansprüche, **dadurch gekennzeichnet, dass** das Dekor (3') im-Randbereich der Aussparung (10') geschwächt ist.

4. Innenverkleidungsteil nach einem der vorhergehenden Ansprüche, **dadurch gekennzeichnet, dass** das Trägerteil (2') im Randbereich (6') der Aussparung (10') mit Rundungen versehen ist.

5. Innenverkleidungsteil nach Anspruch 1, **dadurch gekennzeichnet, dass** die Hinterschäumung (7') im Randbereich der Aussparung (10') im Wesentlichen umlaufend geschwächt ist.

6. Innenverkleidungsteil nach Anspruch 1 oder Anspruch 5, **dadurch gekennzeichnet, dass** das Klappenteil (4') mit dem Trägerteil (2') über ein als Gewebe (13') ausgeführtes Scharnier verbunden ist, welches einerseits am Trägerteil (2') und anderseits am Klappenteil (4') befestigt ist.

7. Innenverkleidungsteil nach Anspruch 6, **dadurch gekennzeichnet, dass** das Gewebe (13') im Randbereich der Aussparung (10') verschmälert ist.

8. Innenverkleidungsteil nach einem der Ansprüche 1 oder 5 bis 7, **dadurch gekennzeichnet, dass** im Bereich der Aussparung (10') eine die Aussparung überspannende und zur Hinterschäumung gehörende Abdichtungsfolie (14') vorgesehen ist.

9. Innenverkleidungsteil nach einem der vorhergehenden Ansprüche, **dadurch gekennzeichnet, dass** die Aussparung im Kniebereich der Fahrzeuginsassen zum Durchtritt eines Kniebags ausgestaltet ist.

10. Verfahren zur Herstellung eines Innenverkleidungsteils nach einem der Ansprüche 1 oder 5 bis 9, **dadurch gekennzeichnet, dass** im Bereich der Aussparung (10') ein die Aussparung bedeckendes Schnittschaumteil (15) auf das Trägerteil (2') aufgelegt wird und anschließend zwischen Dekor (3') und Trägerteil (2') eine Hinterschäumung (7') durchgeführt wird, welche einerseits Trägerteil und Dekor bindet und andererseits den Schnittschaum zumindest teilweise durchdringt und in die Hinterschäumung einbindet, so dass die entstehende Hinterschäumung im Bereich der Aussparung (10') einen härteren Schaum aufweist als in den übrigen Bereichen der Hinterschäumung.

## Claims

1. Interior trim panel (1') for motor vehicles, having at least one weak point for forming an opening for the passage of an airbag (5'), having a support part (2') and a decorative element (3') on the visible side, which decorative element is applied on the support part,
the support part having a cutout (10') in the region of the subsequent passage opening, which cutout is bridged at least partially by a flap part (4') made of a softer material than the support part,
**characterised**
**in that** the decorative element is foam-backed (7') on the side facing towards the support part, and the flap part (4') is part of the foam-backing (7'), the foam-backing having a harder foam in the region of the cutout (10') than in the remaining regions of the foam-backing.

2. Interior trim panel according to Claim 1, **characterised in that** the decorative element (3') is embodied as textile material, as a foam sheet or as a leather layer.

3. Interior trim panel according to one of the preceding claims, **characterised in that** the decorative element (3') is weakened in the edge region of the cutout (10').

4. Interior trim panel according to one of the preceding claims, **characterised in that** the support part (2') is provided with roundings in the edge region of the cutout (10').

5. Interior trim panel according to Claim 1, **characterised in that** the foam-backing (7') is weakened substantially all the way round in the edge region of the cutout (10').

6. Interior trim panel according to Claim 1 or Claim 5, **characterised in that** the flap part (4') is connected to the support part (2') via a hinge embodied as woven fabric (13'), which hinge is attached on the one hand to the support part (2') and on the other hand to the flap part (4').

7. Interior trim panel according to Claim 6, **characterised in that** the woven fabric (13') is narrowed in the edge region of the cutout (10').

8. Interior trim panel according to one of Claims 1 or 5 to 7, **characterised in that**, in the region of the cutout (10'), a sealing film (14') spanning the cutout and associated with the foam-backing is provided.

9. Interior trim panel according to one of the preceding claims, **characterised in that** the cutout is configured in the knee region of the vehicle occupants for the passage of a knee bag.

10. Method for producing an interior trim panel according to one of Claims 1 or 5 to 9, **characterised in that**, in the region of the cutout (10'), a cut-foam part (15) covering the cutout is placed on the support part (2') and a foam-backing (7') is carried out subsequently between the decorative element (3') and the support part (2'), which foam-backing on the one hand binds the carrier part and the decorative element and on the other hand penetrates the cut foam at least partially and binds it into the foam-backing, so that the resulting foam-backing has a harder foam in the region of the cutout (10') than in the remaining regions of the foam-backing.

## Revendications

1. Partie d'habillage intérieur (1') pour véhicules automobiles, comprenant au moins un point faible destiné à former une ouverture pour le passage d'un airbag (5'), une partie support (2') et un décor (3') côté visible, qui est placé sur la partie support,
la partie support présentant dans la zone de la future ouverture de passage un évidement (10') qui est surmonté au moins partiellement d'une partie clapet (4') à base d'un matériau plus souple que la partie support,
**caractérisé en ce que**
le décor est moussé à l'arrière (7') sur le côté tourné vers la partie support et la partie clapet (4') fait partie du moussage arrière (7'),
le moussage arrière (7') présentant dans la zone de l'évidement (10') une mousse plus dure que dans les autres zones du moussage arrière.

2. Partie d'habillage intérieur selon la revendication 1, **caractérisé en ce que** le décor (3') est réalisé sous forme de matériau textile, de film de mousse ou de couche de cuir.

3. Partie d'habillage intérieur selon l'une quelconque des revendications précédentes, **caractérisé en ce que** le décor (3') est affaibli dans la zone périphérique de l'évidement (10').

4. Partie d'habillage intérieur selon l'une quelconque des revendications précédentes, **caractérisé en ce que** la partie support (2') est dotée d'arrondis dans la zone périphérique (6') de l'évidement (10').

5. Partie d'habillage intérieur selon la revendication 1, **caractérisé en ce que** le moussage arrière (7') est atténué essentiellement sur le pourtour dans la zone périphérique de l'évidement (10').

6. Partie d'habillage intérieur selon la revendication 1 ou la revendication 5, **caractérisé en ce que** la partie clapet (4') est reliée à la partie support (2') au moyen d'une charnière réalisée sous forme de tissu (13'), laquelle charnière est fixée d'une part sur la partie support (2') et d'autre part sur la partie clapet (4').

7. Partie d'habillage intérieur selon la revendication 6, **caractérisé en ce que** le tissu (13') est terminé en pointe dans la zone périphérique de l'évidement (10').

8. Partie d'habillage intérieur selon l'une quelconque des revendications 1 ou 5 à 7, **caractérisé en ce que**, dans la zone de l'évidement (10'), il est prévu un film d'étanchéité (14') recouvrant l'évidement et appartenant au moussage arrière.

9. Partie d'habillage intérieur selon l'une quelconque des revendications précédentes, **caractérisé en ce que** l'évidement est réalisé dans la zone des genoux des passagers du véhicule pour le passage d'un coussin pour genoux.

10. Procédé pour la fabrication d'une partie d'habillage intérieur selon l'une quelconque des revendications 1 ou 5 à 9, **caractérisé en ce que**, dans la zone de l'évidement (10'), une partie de mousse coupée (15) recouvrant l'évidement est posée sur la partie support (2') et un moussage arrière (7') est effectué ensuite entre le décor (3') et la partie support (2'), lequel moussage arrière relie d'une part la partie support et le décor et traverse d'autre part au moins partiellement la mousse coupée et s'engage dans le moussage arrière, de sorte que le moussage arrière en formation présente dans la zone de l'évidement (10') une mousse plus dure que dans les autres zones du moussage arrière.
